# EUROPEAN PATENT APPLICATION

(11) **EP 4 667 930 A1**
(43) Date of publication of application: **24.12.2025**
(21) Application number: 23922818.2
(22) Date of filing: 28.07.2023
(51) Int. Cl.: G01N 29/32, G07D 7/08

(54) **INSPECTION DEVICE AND INSPECTION METHOD**

(30) Priority: 13.02.2023 JP 2023019787
(71) Applicant: Kabushiki Kaisha Toshiba, Tokyo 105-0023 (JP)
(72) Inventor: ONO, Tomio, Tokyo 105-0023 (JP); NAKAI, Yutaka, Tokyo 105-0023 (JP); YAMAMOTO, Noriko, Tokyo 105-0023 (JP)
(74) Representative: Marks & Clerk LLP
(86) International application number: PCT/JP2023/027721
(87) International publication number: WO 2024/171484

(57) **Abstract**

An inspection device and an inspection method capable of improving detection accuracy are provided. According to one embodiment, an inspection device includes first and second transmitters, first and second receivers, a transporter, and a controller. The first transmitter includes a plurality of first transmitting elements. The first transmitting elements are arranged along a first direction. The second transmitter includes a plurality of second transmitting elements. The second transmitting elements are arranged along the first direction and transmit a second ultrasonic wave. A second direction from the first transmitter to the second transmitter crosses the first direction.. The controller causes the first transmitter to transmit the first ultrasonic wave and causes the second transmitter to transmit the second ultrasonic wave. The controller supplies a first signal to the one of the plurality of first transmitting elements and supplies a first neighboring signal to the other one of the plurality of first transmitting elements. The first neighboring signal is an inversion of the first signal.

## Description

### [Technical Field]

Embodiments of the invention relate to an inspection device and an inspection method.

### [Background Art]

For example, there is an inspection device using ultrasonic waves. Improvement in detection accuracy is desired.

### [Prior Art Documents]

### [Patent Literature]

[Patent Literature 1] Japanese Patent No. 6668135

### [Summary of Invention]

### [Problem to be Solved by the Invention]

Embodiments of the invention provide an inspection device and an inspection method capable of improving detection accuracy.

### [Means for Solving the Problem]

According to one embodiment, an inspection device includes a first transmitter, a second transmitter, a first receiver, a second receiver, a transporter, and a controller. The first transmitter includes a plurality of first transmitting elements. The plurality of first transmitting elements are arranged along a first direction and configured to transmit a first ultrasonic wave. The second transmitter includes a plurality of second transmitting elements. The plurality of second transmitting elements are arranged along the first direction and configured to transmit a second ultrasonic wave. A second direction from the first transmitter to the second transmitter crosses the first direction. A second position of one of the plurality of second transmitting elements in the first direction is between a first position of one of the plurality of first transmitting elements in the first direction and a first neighboring position of another one of the plurality of first transmitting elements in the first direction. The other one of the plurality of first transmitting elements is next to the one of the plurality of first transmitting elements. The first receiver includes a plurality of first receiving elements configured to receive the first ultrasonic wave. The second receiver includes a plurality of second receiving elements configured to receive the second ultrasonic wave. The transporter is configured to transport an inspection target along the second direction in a space between the first transmitter and the first receiver and between the second transmitter and the second receiver. The controller is configured to cause the first transmitter to transmit the first ultrasonic wave and to cause the second transmitter to transmit the second ultrasonic wave. The controller is configured to supply a first signal to the one of the plurality of first transmitting elements and to supply a first neighboring signal to the other one of the plurality of first transmitting elements. The first neighboring signal is an inversion of the first signal.

### [Brief Description of Drawings]

[FIG. 1] FIG. 1 is a schematic perspective view illustrating an inspection device according to the first embodiment.
[FIG. 2] FIG. 2 is a schematic side view illustrating the inspection device according to the first embodiment.
[FIG. 3] FIG. 3 is a schematic plan view illustrating the inspection device according to the first embodiment.
[FIG. 4] FIG. 4 is a schematic side view illustrating an inspection device according to the first embodiment.
[FIG. 5] FIG. 5 is a schematic plan view illustrating an inspection device according to the second embodiment.
[FIG. 6] FIGS. 6A to 6D are schematic cross-sectional views illustrating the inspection device according to the second embodiment.
[FIG. 7] FIG. 7 is a flowchart illustrating the inspection method according to the third embodiment.

### [Description of Embodiments]

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously in an antecedent drawing are marked with like reference numerals, and a detailed description is omitted as appropriate.

### First Embodiment

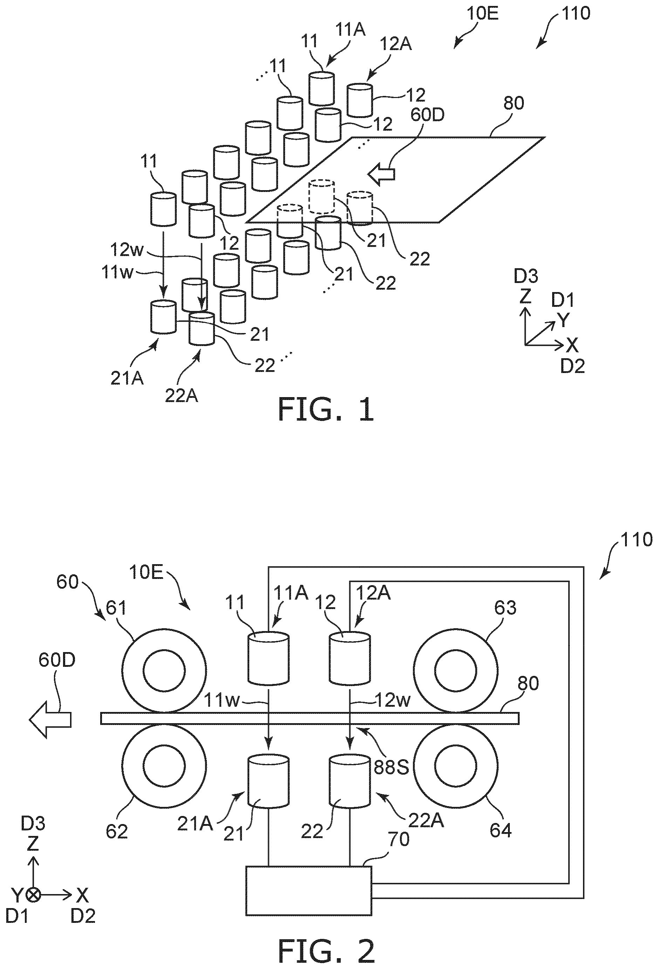

FIG. 1 is a schematic perspective view illustrating an inspection device according to the first embodiment.

FIG. 2 is a schematic side view illustrating the inspection device according to the first embodiment.

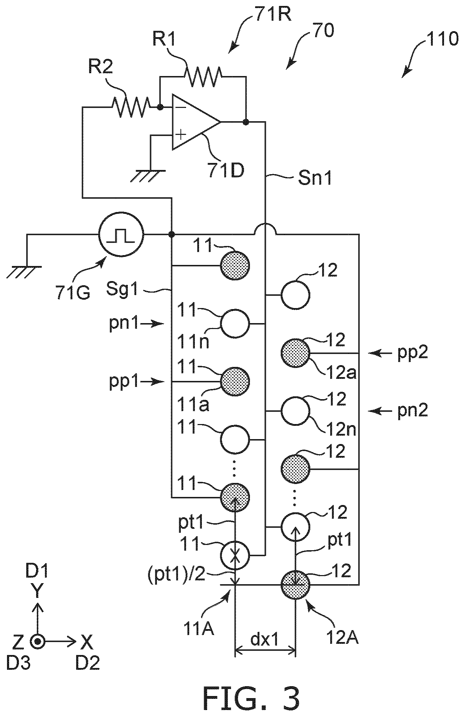

FIG. 3 is a schematic plan view illustrating the inspection device according to the first embodiment.

As shown in FIGS. 1 and 2, an inspection device 110 according to the embodiment includes a first transmitter 11A, a second transmitter 12A, a first receiver 21A, a second receiver 22A, a transporter 60, and a controller 70.

The first transmitter 11A includes a plurality of first transmitting elements 11. The plurality of first transmitting elements 11 are arranged along a first direction D1. The plurality of first transmitting elements 11 are configured to transmit a first ultrasonic wave 11w.

The first direction D1 is defined a Y-axis direction. One direction perpendicular to the Y-axis direction is defined as an X-axis direction. A direction perpendicular to the Y-axis direction and the X-axis direction is defined as a Z-axis direction.

The second transmitter 12A includes a plurality of second transmitting elements 12. The plurality of second transmitting elements 12 are arranged along the first direction D1. The plurality of second transmitting elements 12 are configured to transmit a second ultrasonic wave 12w. A second direction D2 from the first transmitter 11A to the second transmitter 12A crosses the first direction D1. The second direction D2 is, for example, along the X-axis direction.

As shown in FIG. 3, a second position pp2 of one of the plurality of second transmitting elements 12 (e.g., element 12a) in the first direction D1 is between a first position pp1 in the first direction D1 of one of the plurality of first transmitting elements 11 (e.g., the element 11a) and a first neighboring position pn1 in the first direction D1 of another one of the plurality of first transmitting elements 11 (e.g., the element 11n). The other one of the plurality of first transmitting elements 11 (e.g., element 11n) is next to the one of the plurality of first transmitting elements 11 (e.g., element 11a).

For example, the first position pp1 in the first direction D1 of the one of the plurality of first transmitting elements 11 (e.g., the element 11a) is between a second position pp2 in the first direction D1 of one of the plurality of second transmitting elements 12 (e.g., the element 12a) and a second neighboring position pn2 in the first direction D1 of another one of the plurality of second transmitting elements 12 (e.g., the element 12n). The other one of the plurality of second transmitting elements 12 (e.g., element 12n) is next to the one of the plurality of second transmitting elements 12 (e.g., element 12a).

As shown in FIG. 1, the first receiver 21A includes a plurality of first receiving elements 21. The plurality of first receiving elements 21 are configured to receive the first ultrasonic wave 11w. The plurality of first receiving elements 21 face the plurality of first transmitting elements 11 respectively.

The second receiver 22A includes a plurality of second receiving elements 22. The plurality of second receiving elements 22 are configured to receive the second ultrasonic wave 12w. The plurality of second receiving elements 22 face the plurality of second transmitting elements 12 respectively.

As shown in FIG. 2, the transporter 60 is configured to transport an inspection target 80 along the second direction D2 through a space 88S between the first transmitter 11A and the first receiver 21A and between the second transmitter 12A and the second receiver 22A. The passing direction (transporting direction 60D) is along the second direction D2.

In this example, the transporter 60 includes a first transport section 61, a second transport section 62, a third transport section 63 and a fourth transport section 64. The inspection target 80 passes between the first transport section 61 and the second transport section 62. The inspection target 80 passes between the third transport section 63 and the fourth transport section 64. These transport sections are, for example, rollers.

The inspection target 80 is, for example, a bill. The material of the inspection target 80 may be resin other than paper. The inspection target 80 may be securities and the like.

The controller 70 is configured to cause the first transmitter 11A to transmit the first ultrasonic wave 11w and the second transmitter 12A to transmit the second ultrasonic wave 12w. The controller 70 includes an electric circuit and the like.

By electrical signals being supplied from the controller 70 to the first transmitter 11A and the second transmitter 12A, the ultrasonic waves are transmitted from these transmitters. The transmitted ultrasonic waves pass through the inspection target 80 and are received by the receiver. Depending on the state of the inspection target 80, the intensity of the ultrasonic wave reaching the receiver changes. The ultrasonic waves are received by the first receiver 21A, the second receiver 22A, and the like, and converted into electrical signals. The state of the inspection target 80 can be inspected from the obtained electrical signal.

The state of the inspection target 80 includes, for example, adhesion of foreign matter (such as tape).

As shown in FIG. 3, in the embodiment, the controller 70 supplies a first signal Sg1 to one of the plurality of first transmitting elements 11 (e.g., element 11a). The controller 70 supplies a first neighboring signal Sn1 to another one of the plurality of first transmitting elements 11 (e.g., the element 11n). The first neighboring signal Sn1 is the inverse of the first signal Sg1.

As shown in FIG. 3, in this example of the embodiment, the controller 70 includes a first circuit 71G and an inverting circuit 71R. The first circuit 71G is configured to generate the first signal Sg1. The inverting circuit 71R inverts the output of the first circuit 71G. The inverting circuit 71R may include, for example, a differential circuit 71D. The output of the first circuit 71G is connected to a negative input of the differential circuit 71D via the resistor R2. The negative input of the differential circuit 71D and an output of the differential circuit 71D are connected by a resistor R1. A positive input of the differential circuit 71D is grounded. The output signal of the inverting circuit 71R corresponds to the first neighboring signal Sn1.

Thus, in the embodiment, reversed signals in polarity are supplied to one of the plurality of first transmitting elements 11 (e.g., element 11a) and to the next one of the plurality of first transmitting elements 11 (e.g., element 11n). Thereby, the phase of the ultrasonic waves transmitted from these elements is shifted by 180 degrees.

In the embodiment, the second position pp2 in the first direction D1 of the one of the plurality of second transmitting elements 12 (the element 12a) is provided between the first position pp1 in the first direction D1 of the one of the plurality of first transmitting elements 11 (element 11a) and the first neighboring position pn1 in the first direction D1 of the one (element 11n) next to the plurality of first transmitting elements 11. Thereby, the resolution in the first direction D1 is improved.

One of the plurality of second receiving elements 22 is provided corresponding to the second position pp2 of the element 12a. In addition to the ultrasonic wave from the element 12a, the ultrasonic wave from the element 11a and the ultrasonic wave from the element 11n reach the one of the plurality of second receiving elements 22. When the ultrasonic wave from the element 11a and the ultrasonic wave from the element 11n have the same phase, these ultrasonic waves are mutually intensified. The ultrasonic wave from the element 11a and the ultrasonic wave from the element 11n generate crosstalk. The crosstalk becomes a noise for the ultrasonic wave received by one of the plurality of second receiving elements 22 from the element 12a. This makes it difficult to detect with high accuracy.

In the embodiment, the phase is shifted by 180 degrees between the ultrasonic wave from the element 11a and the ultrasonic wave from the element 11n. These ultrasonic waves weaken each other. The crosstalk is suppressed. Thereby, one of the plurality of second receiving elements 22 can receive ultrasonic waves from the element 12a at low noise. This makes it possible to detect with high accuracy. According to the embodiment, an inspection device capable of improving detection accuracy can be provided.

In the embodiment, a distance between the second position pp2 and the first position pp1 may be substantially the same as a distance between the second position pp2 and the first neighboring position pn1. A distance between one of the plurality of second receiving elements 22 provided corresponding to the second position pp2 and the first position pp1 may be substantially the same as a distance between one of the plurality of second receiving elements 22 and the first neighboring position pn1.

As shown in FIG. 3, the plurality of first transmitting elements 11 are arranged at a first pitch pt1 along the first direction D1. The plurality of second transmitting elements 12 are arranged at the first pitch pt1 along the first direction D1. The positions of the plurality of second transmitting elements 12 in the first direction D1 are shifted at 1/2 of the first pitch pt1 with respect to the positions of the plurality of first transmitting elements 11 in the first direction D1.

For example, as shown in FIG. 3, the controller 70 is configured to alternately supply the first signal Sg1 and the first neighboring signal Sn1 to the plurality of first transmitting elements 11. Crosstalk is suppressed.

As shown in FIG. 3, a distance along the second direction D2 between a position in the second direction D2 of one of the plurality of first transmitting elements 11 (element 11a) and a position in the second direction D2 of one of the plurality of second transmitting elements 12 (element 12a) is defined as a distance dx1. The distance dx1 corresponds, for example, to a pitch between the first transmitter 11A and the second transmitter 12A. In the embodiment, the distance dx1 is preferably 10 times or less of the first pitch pt1. Thereby, detection with higher accuracy can be obtained. When the distance dx1 is short, the distance between the first transmitter 11A and the second receiver 22A along the second direction D2 is also short. In this situation, the reduction of crosstalk by the application of the inverted polarity is effectively obtained. Practically, the distance dx1 may be not less than 2 times the first pitch pt1.

As shown in FIG. 3, the controller 70 supplies the first signal Sg1 to one (e.g., the element 12a) of the plurality of second transmitting elements 12. The controller 70 supplies the first neighboring signal Sn1 to another one (e.g., the element 12n) of the plurality of second transmitting elements 12. Another one (element 12n) of the plurality of second transmitting elements 12 is next to one (element 12a) of the plurality of second transmitting elements 12.

Thereby, at the position of the receiving element corresponding to the element 11a, the ultrasonic wave transmitted from the element 12a and the ultrasonic wave transmitted from the element 12n weaken each other. Crosstalk is suppressed.

In the embodiment, the phase of the first ultrasonic wave 11w transmitted from another one (element 11n) of the plurality of first transmitting elements 11 is shifted by 180 degrees with respect to the phase of the first ultrasonic wave 11w transmitted from one (element 11a) of the plurality of first transmitting elements 11.

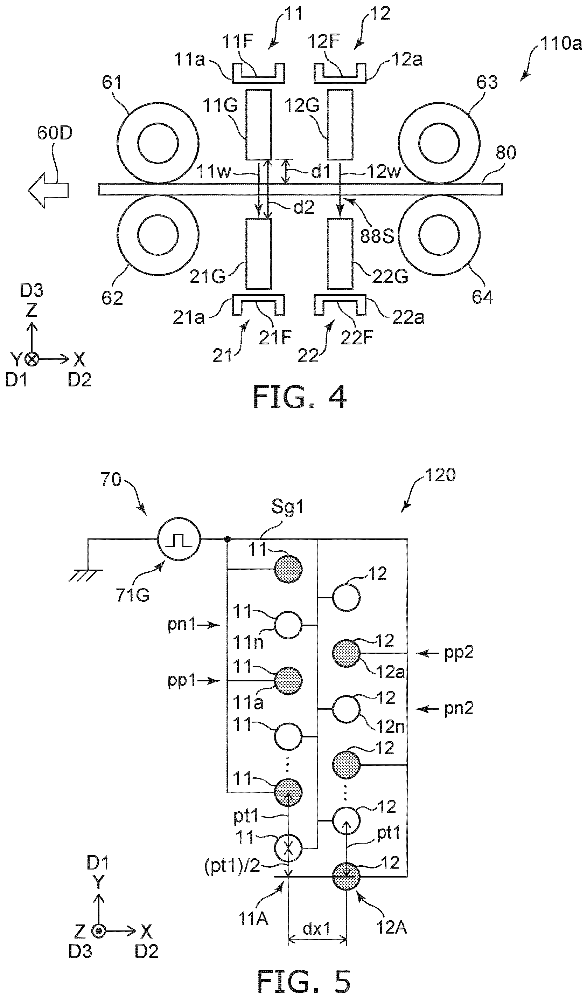

FIG. 4 is a schematic side view illustrating an inspection device according to the first embodiment.

As shown in FIG. 4, in an inspection device 110a according to the embodiment, one of the plurality of first transmitting elements 11 (element 11a) includes a waveguide (first transmitting waveguide 11G). Except for this, the configuration of the inspection device 110a may be the same as the configuration of the inspection device 110.

As shown in FIG. 4, one of the plurality of first transmitting elements 11 (e.g., element 11a) includes a first transmitting transducer film 11F and a first transmitting waveguide 11G. The first transmitting transducer film 11F is configured to generate the first ultrasonic wave 11w. The first transmitting waveguide 11G is configured to guide the first ultrasonic wave 11w. The first transmitting waveguide 11G is, for example, a waveguide tube. Ultrasonic waves propagate through the waveguide tube. Such a configuration may be provided in each of the plurality of first transmitting elements 11. By providing the waveguide tube, for example, multiple reflection can be suppressed. The substantial absence of the effects of multiple reflections allows faster inspection.

As shown in FIG. 4, one of the plurality of second transmitting elements 12 (e.g., element 12a) includes a second transmitting transducer film 12F and a second transmitting waveguide 12G. The second transmitting transducer film 12F is configured to generate the second ultrasonic wave 12w. The second transmitting waveguide 12G is configured to guide the second ultrasonic wave 12w. The second transmitting waveguide 12G is, for example, a waveguide tube. Ultrasonic waves propagate through the waveguide tube. Such a configuration may be provided in each of the plurality of second transmitting elements 12.

As shown in FIG. 4, one of the plurality of first receiving elements 21 (elements 21a) includes a first receiving waveguide 21G and a first receiving transducer film 21F. The first receiving waveguide 21G is configured to guide the first ultrasonic wave 11w. The first receiving transducer film 21F is configured to be deformed by the first ultrasonic wave 11w. The first ultrasonic wave 11w passing through the inspection target 80 propagates through the first receiving waveguide 21G to reach the first receiving transducer film 21F. The deformation of the first receiving transducer film 21F corresponding to the first ultrasonic wave 11w reaching the first receiving transducer film 21F is converted into an electrical signal by a piezoelectric element or the like. The electrical signal includes information on the condition of the inspection target 80.

As shown in FIG. 4, the first transmitting waveguide 11G is located between the first transmitting transducer film 11F and the first receiving transducer film 21F. The first receiving waveguide 21G is located between the first transmitting waveguide 11G and the first receiving transducer film 21F.

As shown in FIG. 4, one of the plurality of second receiving elements 22 (elements 22 a) includes a second receiving waveguide 22G and a second receiving transducer film 22F. The second receiving waveguide 22G is configured to guide the second ultrasonic wave 12w. The second receiving transducer film 22F is configured to be deformed by the second ultrasonic wave 12w. The second ultrasonic wave 12w passing through the inspection target 80 propagates through the second receiving waveguide 22G to reach the second receiving transducer film 22F. The deformation of the second receiving transducer film 22F corresponding to the second ultrasonic wave 12w reaching the second receiving transducer film 22F is converted into the electrical signal by a piezoelectric element or the like. The electrical signal includes information on the condition of the inspection target 80.

As shown in FIG. 4, the second transmitting waveguide 12G is located between the second transmitting transducer film 12F and the second receiving transducer film 22F. The second receiving waveguide 22G is located between the second transmitting waveguide 12G and the second receiving transducer film 22F.

By providing such waveguides, the influence of the ultrasonic wave from other than the corresponding transmitting element is suppressed. Noise is more suppressed. Detection with higher precision becomes possible.

On the other hand, in a case where the wave guide is provided, the influence of the ultrasonic wave transmitted from the next transmitting element becomes large, and the crosstalk is more likely to occur. By applying the inverting signal according to the embodiment, the crosstalk can be suppressed even when the waveguide which makes the crosstalk easy to occur is provided.

In the embodiment, a distance between a position of the inspection target 80 in a third direction D3 and a position of the first transmitting waveguide 11G in the third direction D3 is defined as a first distance d1. The first distance d1 may be the distance between a position of the inspection target 80 in the third direction D3 and a position of the end of the first transmitting waveguide 11G in the third direction D3. Practically, the first distance d1 is, for example, 0.5 times or less the first pitch pt1 (see FIG. 3). Practically, the first distance d1 may be 0.1 times or more the first pitch pt1. The third direction D3 crosses a plane including the first direction D1 and the second direction.

As shown in FIG. 4, a distance in the third direction D3 between the first receiving waveguide 21G and the first transmitting waveguide 11G is defined as a second distance d2. In the embodiment, the second distance d2 is preferably, for example, not more than one time the first pitch pt1 (see FIG. 3). Thereby, the crosstalk is effectively suppressed. A reduction in crosstalk due to the application of reversed polarities is obtained more effectively if the second distance d2 is small. Practically, the second distance d2 may be 0.2 times or more the first pitch pt1.

The second distance d2 is preferably three times or less the wavelength of the first ultrasonic wave 11w. Practically, the second distance d2 is preferably 0.5 times or more the wavelength of the first ultrasonic wave 11w.

### Second Embodiment

The second embodiment will be described with respect to the parts that differ from the first embodiment.

FIG. 5 is a schematic plan view illustrating an inspection device according to the second embodiment.

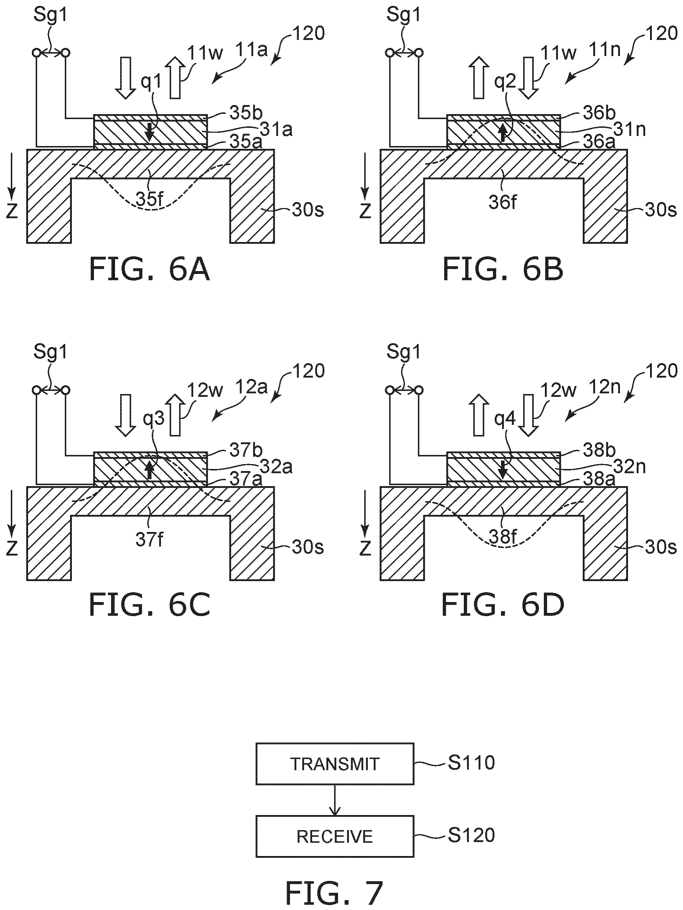

FIGS. 6A to 6D are schematic cross-sectional views illustrating the inspection device according to the second embodiment.

As shown in FIG. 5, an inspection device 120 according to the embodiment also includes the first transmitter 11A, the second transmitter 12A, the first receiver 21A (see FIGS. 1 and 2), the second receiver 22A (see FIGS. 1 and 2), and the transporter 60 (see FIG. 2). In the inspection device 120, the configurations of the first receiver 21A, the second receiver 22A, and the transporter 60 may be the same as the configurations in the inspection device 110.

As shown in FIG. 5, the first transmitter 11A includes the plurality of first transmitting elements 11. The plurality of first transmitting elements 11 are arranged along the first direction D1 and is configured to transmit the first ultrasonic wave 11w (see FIG. 1).

The second transmitter 12A includes a plurality of second transmitting elements 12. The plurality of second transmitting elements 12 are arranged along the first direction D1. The plurality of second transmitting elements 12 are configured to transmit the second ultrasonic wave 12w (see FIG. 1). The second direction D2 from the first transmitter 11A to the second transmitter 12A crosses the first direction D1.

In the inspection device 120 as well, the first receiver 21A includes the plurality of first receiving elements 21 (see FIG. 1). The plurality of first receiving elements 21 are configured to receive the first ultrasonic wave 11w. The second receiver 22A includes the plurality of second receiving elements 22 (see FIG. 1). The plurality of second receiving elements 22 are configured to of receive the second ultrasonic wave 12w. The transporter 60 (see FIG. 2) is configured to transport the inspection target 80 in the second direction D2 in the space 88S between the first transmitter 11A and the first receiver 21A and between the second transmitter 12A and the second receiver 22A.

The second position pp2 in the first direction D1 of one (element 12a) of the plurality of second transmitting elements 12 is between the first position pp1 in the first direction D1 of one (element 11a) of the plurality of first transmitting elements 11 and the first neighboring position pn1 in the first direction D1 of another one (element 11n) of the plurality of first transmitting elements 11. The other one (element 11n) of the plurality of first transmitting elements 11 is next to one (element 11a) of the plurality of first transmitting elements 11.

In the inspection device 120, the configuration of the element 11a is different from the configuration of the element 11n.

FIG. 6A corresponds to one of the plurality of first transmitting elements 11 (element 11a). FIG. 6B corresponds to another (next) one element (element 11n) of the plurality of first transmitting elements 11.

As shown in FIG. 6A, one of the plurality of first transmitting elements 11 (elements 11a) includes a first piezoelectric layer 31a. As shown in FIG. 6B, one of (next to) the plurality of first transmitting elements 11 (element 11n) includes a first neighboring piezoelectric layer 31n. The polarity q2 of the first neighboring piezoelectric layer 31n is inverted with respect to the polarity q1 of the first piezoelectric layer 31a. The polarity is, for example, the direction of polarization. The direction of polarization can be controlled, for example, by a high voltage application process performed in the manufacturing process of the device. The polarity may be controlled by, for example, a material (e.g., crystal orientation).

As shown in FIG. 6A, the first piezoelectric layer 31a is provided between an electrode 35a and an electrode 35b. A stacked body including the first piezoelectric layer 31a, the electrode 35a and the electrode 35b is fixed to a film portion 35f. The film portion 35f is supported by a base 30s. When the first signal Sg1 (e.g., an AC signal) is applied to these electrodes, the first piezoelectric layer 31a is deformed. The film portion 35f is deformed by the deformation. The first ultrasonic wave 11w is generated by deformation.

As shown in FIG. 6B, the first neighboring piezoelectric layer 31n is provided between the electrode 36a and the electrode 36b. A stacked body including the first neighboring piezoelectric layer 31n, the electrode 36a and the electrode 36b is fixed to a film portion 36f. The film portion 36f is supported by the base 30s. By applying the first signal Sg1 (e.g., an AC signal) to these electrodes, the first neighboring piezoelectric layer 31n is deformed. By the deformation, the film portion 36f is deformed. The deformation generates the first ultrasonic wave 11w.

Due to the difference in polarity in the piezoelectric layers, the phase of deformation of the film portion 36f is shifted by 180 degrees from the phase of deformation of the film portion 35f. Thereby, the phase of the ultrasonic wave transmitted from the element 11n is shifted by 180 degrees with respect to the phase of the ultrasonic wave transmitted from the element 11a. The ultrasonic waves transmitted from the element 11n and the ultrasonic waves transmitted from the element 11a weaken each other.

By such a configuration, crosstalk is suppressed. Also in the inspection device 120, an inspection device capable of improving detection accuracy can be provided.

Thus, in the embodiment, the phase of the first ultrasonic wave 11w transmitted from another one (e.g., element 11n) of the plurality of first transmitting elements 11 is shifted by 180 degrees with respect to the phase of the first ultrasonic wave 11w transmitted from one (e.g., element 11a) of the plurality of first transmitting elements 11.

As shown in FIG. 5, the controller 70 may be provided in the inspection device 120. The controller 70 is configured to cause the first transmitter 11A to transmit the first ultrasonic wave 11w. The controller 70 is configured to cause the second transmitter 12A to transmit the second ultrasonic wave 12w. The controller 70 supplies the first signal Sg1 to one (element 11a) of the plurality of first transmitting elements 11, and supplies the first signal Sg1 to one (element 11n) of the other (next) of the plurality of first transmitting elements 11. The first signal Sg1 being same is supplied, and an ultrasonic wave having a phase shifted by 180 degrees is transmitted by the piezoelectric layer having opposite polarity.

In this example, the controller 70 includes a first circuit 71G. The first circuit 71G is configured to generate the first signal Sg1. The output (first signal Sg1) of the first circuit 71G is supplied to the plurality of first transmitting elements 11 (and the plurality of second transmitting elements 12).

As shown in FIG. 5, the distance between the second position pp2 of the element 12a and the first position pp1 of the element 11a may be substantially the same as the distance between the second position pp2 and the first neighboring position pn1 of the element 11n.

As shown in FIG. 5, the plurality of first transmitting elements 11 are arranged at the first pitch pt1 along the first direction D1. The plurality of second transmitting elements 12 are arranged at the first pitch pt1 along the first direction D1. The position of the plurality of second transmitting elements 12 in the first direction D1 may be shifted at 1/2 of the first pitch pt1 with respect to the position of the plurality of first transmitting elements 11 in the first direction D1.

The configuration illustrated in FIGS. 6A and 6B may be applied to the plurality of first transmitting elements 11. For example, the polarity of the piezoelectric layers (such as the first piezoelectric layer 31a and the first neighboring piezoelectric layer 31n) included in each of the plurality of first transmitting elements 11 may be alternately inverted in the plurality of first transmitting elements 11. In this case, the controller 70 is configured to supply the first signal Sg1 to the plurality of first transmitting elements 11.

As shown in FIG. 5, the plurality of second transmitting elements 12 include elements 12a and elements 12n. The element 12n is next to the element 12a.

FIG. 6C corresponds to the element 12a. FIG. 6D corresponds to the element 12n.

As shown in FIG. 6C, one of the plurality of second transmitting elements 12 (elements 12a) includes a second piezoelectric layer 32a. As shown in FIG. 6D, one of (next) the plurality of second transmitting elements 12 (element 12n) includes a second neighboring piezoelectric layer 32n. The polarity q4 of the second neighboring piezoelectric layer 32n is inverted with respect to the polarity q3 of the second piezoelectric layer 32a. Polarity is, for example, the direction of polarization. The polarity is, for example, a crystal orientation.

As shown in FIG. 6 C, the second piezoelectric layer 32a is provided between an electrode 37a and an electrode 37b. The stacked body including the second piezoelectric layer 32a, the electrode 37a and the electrode 37b is fixed to a film portion 37f. The film portion 37f is supported by the base 30s. When the first signal Sg1 (e.g., an AC signal) is applied to these electrodes, the second piezoelectric layer 32a is deformed. By the deformation, the film portion 37f is deformed. By the deformation, the second ultrasonic wave 12w is generated.

As shown in FIG. 6D, the second neighboring piezoelectric layer 32n is provided between an electrode 38a and an electrode 38b. The stacked body including the second neighboring piezoelectric layer 32n, the electrode 38a and the electrode 38b is fixed to a film portion 38f. The film portion 38f is supported by the base 30s. When the first signal Sg1 (e.g., an AC signal) is applied to these electrodes, the second neighboring piezoelectric layer 32n is deformed. By the deformation, the film portion 38f is deformed. By the deformation, the second ultrasonic wave 12w is generated.

Due to the difference in polarity in the piezoelectric layers, the phase of deformation of the film portion 38f is shifted by 180 degrees from the phase of deformation of the film portion 37f. Thereby, the phase of the ultrasonic wave transmitted from the element 12n is shifted by 180 degrees with respect to the phase of the ultrasonic wave transmitted from the element 12a. The ultrasonic wave transmitted from the element 12n and the ultrasonic wave transmitted from the element 12a weaken each other.

Such a configuration may be applied to the plurality of second transmitting elements 12. For example, the polarity of the piezoelectric layers included in each of the plurality of second transmitting elements 12 may be alternately inverted in the plurality of second transmitting elements 12. The controller 70 is configured to supply the first signal Sg1 to the plurality of second transmitting elements 12.

The configurations illustrated in FIGS. 6A to 6D are, for example, monomorph structures. In the embodiments, other structures (e.g., bimorph structures, etc.) may be applied.

The film portion 35f corresponds to first transmitting transducer film 11F (see FIG. 4). The film portion 36f corresponds to second transmitting transducer film 12F (see FIG. 4).

In the embodiment, the phase of the first ultrasonic wave 11w transmitted from another one (e.g., element 11n) of the plurality of first transmitting elements 11 is shifted by 180 degrees with respect to the phase of the first ultrasonic wave 11w transmitted from one (e.g., element 11a) of the plurality of first transmitting elements 11.

In the inspection device 120, the configuration described with reference to FIG. 4 may be applied. For example, one of the plurality of first transmitting elements 11 (element 11a) may include the first transmitting transducer film 11F configured to generate the first ultrasonic wave 11w and the first transmitting waveguide 11G configured to guide the first ultrasonic wave 11w.

In the inspection device 120, one of the plurality of first receiving elements 21 may include the first receiving waveguide 21G configured to guide the first ultrasonic wave 11w and the first receiving transducer film 21F deformable by the first ultrasonic wave 11w (see FIG. 4). The first transmitting waveguide 11G is provided between the first transmitting transducer film 11F and the first receiving transducer film 21F. The first receiving waveguide 21G is located between the first transmitting waveguide 11G and the first receiving transducer film 21F (see FIG. 4).

### Third Embodiment

The third embodiment relates to an inspection method.

The inspection method according to the embodiment may be a method that adopts the configuration described with respect to the first embodiment or the second embodiment.

FIG. 7 is a flowchart illustrating the inspection method according to the third embodiment.

As shown in FIG. 7, in the inspection method, ultrasonic waves are transmitted (step S110). In the inspection method, ultrasonic waves are received to inspect the inspection target 80 (step S120).

In the step S110, the first ultrasonic wave 11w is transmitted from the first transmitter 11A of an element section 10E (see FIG. 1), and the second ultrasonic wave 12w is transmitted from the second transmitter 12A of the element section 10E. The element section 10E includes the first transmitter 11A and the second transmitter 12A illustrated in FIG. 3. The element section 10E includes the first receiver 21A and the second receiver 22A (see FIG. 1).

In the inspection method, for example, the first signal Sg1 is supplied to one (element 11a) of the plurality of first transmitting elements 11. The first neighboring signal Sn1 is supplied to another one (element 11n) of the plurality of first transmitting elements 11. The first neighboring signal Sn1 is an inversion of the first signal Sg1.

In the step S120, the inspection target 80 moving along the second direction D2 in the space 88S between the first transmitter 11A and the first receiver 21A and between the second transmitter 12A and the second receiver 22A is inspected (see FIG. 2).

In the inspection method according to the embodiment, the configuration described with respect to the inspection device 120 may be applied. For example, one of the plurality of first transmitting elements 11 (element 11a) includes the first piezoelectric layer 31a (see FIG. 6A). Another one of the plurality of first transmitting elements 11 (element 11n) includes the first neighboring piezoelectric layer 31n (see FIG. 6B). The polarity q2 of the first neighboring piezoelectric layer 31n is inverted with respect to the polarity q1 of the first piezoelectric layer 31a (see FIGS. 6A and 6B).

In the inspection method according to the embodiment, the phase of the ultrasonic wave transmitted from the neighboring transmitting elements is shifted by 180 degrees. Thereby, for example, crosstalk is suppressed. It is possible to provide an inspection method capable of improving detection accuracy.

The inspection device according to the embodiment detects, for example, the thickness of the inspection target 80 being sheet-like such as paper, the presence or absence of a tape, and the like, using ultrasonic waves. For example, crosstalk may occur between multiple pairs of transmitting and receiving elements, degrading test accuracy.

The crosstalk includes, for example, horizontal crosstalk occurring in a direction crossing the transporting direction 60D and vertical crosstalk occurring in the transporting direction 60D.

There is a reference example to suppress the vertical crosstalk. In the reference example, transmitting of the ultrasonic waves and stop of the transmitting of the ultrasonic waves are controlled so that crosstalk does not occur. In such a reference example, high-speed inspection and high resolution are insufficient.

According to embodiments, for example, the polarity of neighboring transmit elements is reversed. The vertical crosstalk can be suppressed with a simple configuration. Stopping the transmitting is not necessary. The system is simple. For example, the end of the inspection target 80 can be inspected with high accuracy.

The embodiments may include the following configurations (for example, technical proposals).

### Configuration 1

An inspection device, comprising:
a first transmitter including a plurality of first transmitting elements, the plurality of first transmitting elements being arranged along a first direction and configured to transmit a first ultrasonic wave;
a second transmitter including a plurality of second transmitting elements, the plurality of second transmitting elements being arranged along the first direction and configured to transmit a second ultrasonic wave, a second direction from the first transmitter to the second transmitter crossing the first direction, a second position of one of the plurality of second transmitting elements in the first direction being between a first position of one of the plurality of first transmitting elements in the first direction and a first neighboring position of another one of the plurality of first transmitting elements in the first direction, the other one of the plurality of first transmitting elements being next to the one of the plurality of first transmitting elements;
a first receiver including a plurality of first receiving elements configured to receive the first ultrasonic wave;
a second receiver including a plurality of second receiving elements configured to receive the second ultrasonic wave;
a transporter configured to transport an inspection target along the second direction in a space between the first transmitter and the first receiver and between the second transmitter and the second receiver; and
a controller configured to cause the first transmitter to transmit the first ultrasonic wave and to cause the second transmitter to transmit the second ultrasonic wave, the controller being configured to supply a first signal to the one of the plurality of first transmitting elements and to supply a first neighboring signal to the other one of the plurality of first transmitting elements, the first neighboring signal being an inversion of the first signal.

### Configuration 2

The inspection device according to Configuration 1, wherein
a distance between the second position and the first position is substantially the same as a distance between the second position and the first neighboring position.

### Configuration 3

The inspection device according to Configuration 1, wherein
the plurality of first transmitting elements are arranged at a first pitch along the first direction,
the plurality of second transmitting elements are arranged at the first pitch along the first direction, and
positions of the plurality of second transmitting elements in the first direction are shifted by 1/2 of the first pitch with respect to the positions of the plurality of first transmitting elements in the first direction.

### Configuration 4

The inspection device according to any one of Configurations 1-3, wherein
the controller is configured to alternately supply the first signal and the first neighboring signal to the plurality of first transmitting elements.

### Configuration 5

The inspection device according to any one of Configurations 1-4, wherein
the controller includes a first circuit configured to generate the first signal and an inverting circuit configured to invert an output of the first circuit.

### Configuration 6

The inspection device according to any one of Configurations 1-5, wherein
the controller is configured to supply the first signal to one of the plurality of second transmitting elements, and to supply the first neighboring signal to another one of the plurality of second transmitting elements, and
the other one of the plurality of second transmitting elements is next to the one of the plurality of second transmitting elements.

### Configuration 7

The inspection device according to any one of Configurations 1-6, wherein
a phase of the first ultrasonic wave transmitted from the other one of the plurality of first transmitting elements is shifted by 180 degrees with respect to a phase of the first ultrasonic wave transmitted from the one of the plurality of first transmitting elements.

### Configuration 8

The inspection device according to any one of Configurations 1-7, wherein
the one of the plurality of first transmitting elements includes
a first transmitting transducer film configured to generate the first ultrasonic wave, and
a first transmitting waveguide configured to guide the first ultrasonic wave.

### Configuration 9

The inspection device according to Configuration 8, wherein
one of the plurality of first receiving elements includes
   a first receiving waveguide configured to guide the first ultrasonic wave, and
   a first receiving transducer film deformable by the first ultrasonic wave,
the first transmitting waveguide is located between the first transmitting transducer film and the first receiving transducer film, and
the first receiving waveguide is located between the first transmitting waveguide and the first receiving transducer film.

### Configuration 10

An inspection device, comprising:
a first transmitter including a plurality of first transmitting elements, the plurality of first transmitting elements being arranged along a first direction and configured to transmit a first ultrasonic wave, one of the plurality of first transmitting elements including a first piezoelectric layer, another one of the plurality of first transmitting elements including a first neighboring piezoelectric layer, the other one of the plurality of first transmitting elements being next to the one of the plurality of first transmitting elements, a polarity of the first neighboring piezoelectric layer being inverted with respect to a polarity of the first piezoelectric layer;
a second transmitter including a plurality of second transmitting elements, the plurality of second transmitting elements being arranged along the first direction and configured to transmit a second ultrasonic wave, a second direction from the first transmitter to the second transmitter crossing the first direction, a second position of one of the plurality of second transmitting elements in the first direction being between a first position of the one of the plurality of first transmitting elements in the first direction and a first neighboring position of the other one of the plurality of first transmitting elements in the first direction;
a first receiver including a plurality of first receiving elements configured to receive the first ultrasonic wave;
a second receiver including a plurality of second receiving elements configured to receive the second ultrasonic wave;
a transporter configured to transport an inspection target along the second direction in a space between the first transmitter and the first receiver and between the second transmitter and the second receiver.

### Configuration 11

The inspection device according to Configuration 10, further comprising:
a controller configured to cause the first transmitter to transmit the first ultrasonic wave and to cause the second transmitter to transmit the second ultrasonic wave, and
the controller is configured to supply a first signal to one of the plurality of first transmitting elements and to supply the first signal to the other one of the plurality of first transmitting elements.

### Configuration 12

The inspection device according to Configuration 10 or 11, wherein
a distance between the second position and the first position is substantially the same as a distance between the second position and the first neighboring position.

### Configuration 13

The inspection device according to Configuration 10 or 11, wherein
the plurality of first transmitting elements are arranged at a first pitch along the first direction,
the plurality of second transmitting elements are arranged at the first pitch along the first direction,
positions of the plurality of second transmitting elements in the first direction are shifted by 1/2 of the first pitch with respect to positions of the plurality of first transmitting elements in the first direction.

### Configuration 14

The inspection device according to any one of Configurations 1-3, wherein
a polarity of a piezoelectric layer included in each of the plurality of first transmitting elements is alternately inverted in the plurality of first transmitting elements, and
the controller is configured to supply the first signal to the plurality of first transmitting elements.

### Configuration 15

The inspection device according to Configuration 14, wherein
a polarity of a piezoelectric layer included in each of the plurality of second transmitting elements is alternately inverted in the plurality of second transmitting elements, and
the controller is configured to supply the first signal to the plurality of second transmitting elements.

### Configuration 16

The inspection device according to any one of Configurations 10-15, wherein
a phase of the first ultrasonic wave transmitted from the other one of the plurality of first transmitting elements is shifted by 180 degrees with respect to a phase of the first ultrasonic wave transmitted from the one of the plurality of first transmitting elements.

### Configuration 17

The inspection device according to any one of Configurations 10-16, wherein
the one of the plurality of first transmitting elements includes
a first transmitting transducer film configured to generate the first ultrasonic wave, and
a first transmitting waveguide configured to guide the first ultrasonic wave.

### Configuration 18

The inspection device according to Configuration 17, wherein
one of the plurality of first receiving elements includes
   a first receiving waveguide configured to guide the first ultrasonic wave, and
   a first receiving transducer film deformable by the first ultrasonic wave,
the first transmitting waveguide is located between the first transmitting transducer film and the first receiving transducer film, and
the first receiving waveguide is located between the first transmitting waveguide and the first receiving transducer film.

### Configuration 19

An inspection method, comprising:
causing a first transmitter to transmit a first ultrasonic wave and causing a second transmitter to transmit a second ultrasonic wave, an element section including
   the first transmitter including a plurality of first transmitting elements, the plurality of first transmitting elements being arranged along a first direction and configured to transmit a first ultrasonic wave,
   the second transmitter including a plurality of second transmitting elements, the plurality of second transmitting elements being arranged along the first direction and configured to transmit a second ultrasonic wave, a second direction from the first transmitter to the second transmitter crossing the first direction, a second position of one of the plurality of second transmitting elements in the first direction being between a first position of one of the plurality of first transmitting elements in the first direction and a first neighboring position of another one of the plurality of first transmitting elements in the first direction, the other one of the plurality of first transmitting elements being next to the one of the plurality of first transmitting elements,
   a first receiver including a plurality of first receiving elements configured to receive the first ultrasonic wave, and
   a second receiver including a plurality of second receiving elements configured to receive the second ultrasonic wave;
supplying a first signal to the one of the plurality of first transmitting elements;
supplying a first neighboring signal to the other one of the plurality of first transmitting elements, the first neighboring signal being an inversion of the first signal; and
inspecting an inspection target moving along the second direction in a space between the first transmitter and the first receiver and between the second transmitter and the second receiver.

### Configuration 20

An inspection method, comprising:
causing a first transmitter to transmit a first ultrasonic wave and causing a second transmitter to transmit a second ultrasonic wave to inspect an inspection target passing through a space between the first transmitter and the first receiver and between the second transmitter and the second receiver along a second direction, an element section including
   the first transmitter including a plurality of first transmitting elements, the plurality of first transmitting elements being arranged along a first direction and configured to transmit the first ultrasonic wave, one of the plurality of first transmitting elements including a first piezoelectric layer, another one of the plurality of first transmitting elements including a first neighboring piezoelectric layer, the other one of the plurality of first transmitting elements being next to the one of the plurality of first transmitting elements, a polarity of the first neighboring piezoelectric layer being inverted with respect to a polarity of the first piezoelectric layer;
   the second transmitter including a plurality of second transmitting elements, the plurality of second transmitting elements being arranged along the first direction and configured to transmit the second ultrasonic wave, the second direction from the first transmitter to the second transmitter crossing the first direction, a second position of one of the plurality of second transmitting elements in the first direction being between a first position of the one of the plurality of first transmitting elements in the first direction and a first neighboring position of the other one of the plurality of first transmitting elements in the first direction;
a first receiver including a plurality of first receiving elements configured to receive the first ultrasonic wave;
a second receiver including a plurality of second receiving elements configured to receive the second ultrasonic wave; and
a transporter configured to transport an inspection target along the second direction in a space between the first transmitter and the first receiver and between the second transmitter and the second receiver.

According to the embodiments, it is possible to provide an inspection device and an inspection method capable of improving detection sensitivity.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in inspection devices such as transmitters, transmitting elements, receivers, receiving elements, transporters, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all inspection devices and inspection methods practicable by an appropriate design modification by one skilled in the art based on the inspection devices and inspection methods described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

### [Reference Numeral List]

10E: element section
11, 12: first and second transmitting elements
11A, 12A: first and second transmitters
11F, 12F: first and second transmitting transducer films
11G, 12G: first and second transmitting waveguides
11a, 11n, 12a, 12n: element
11w, 12w: first and second ultrasonic waves
21, 22: first and second receiving elements
21A, 22A: first and second receivers
21F, 22F: first and second receiving transducer films
21G, 22G: first and second receiving waveguides
21a, 22a: element
30s: base
31a, 32a: first and second piezoelectric layers
31n, 32n: first and second neighboring piezoelectric layers
35a, 35b, 36a, 36b, 37a, 37b, 38a, 38b: electrode
35f, 36f, 37f, 38f: film portion
60: transporter
60D: transporting direction
61 to 64: first to fourth transport sections
70: controller
71D: differential circuit
71G: first circuit
71R: inverting circuit
80: inspection target
88S: space
110, 110a, 120: inspection device
D1, D2: first and second directions
R1, R2: resistor
d1, d2: first and second distances
dx1: distance
Sg1: first signal
Sn1: first neighboring signal
pn1, pn2: first and second neighboring positions
pp1, pp2: first and second positions
pt1: first pitch
q1 to q4: polarity

## Claims

1. An inspection device, comprising:
a first transmitter including a plurality of first transmitting elements, the plurality of first transmitting elements being arranged along a first direction and configured to transmit a first ultrasonic wave;
a second transmitter including a plurality of second transmitting elements, the plurality of second transmitting elements being arranged along the first direction and configured to transmit a second ultrasonic wave, a second direction from the first transmitter to the second transmitter crossing the first direction, a second position of one of the plurality of second transmitting elements in the first direction being between a first position of one of the plurality of first transmitting elements in the first direction and a first neighboring position of another one of the plurality of first transmitting elements in the first direction, the other one of the plurality of first transmitting elements being next to the one of the plurality of first transmitting elements;
a first receiver including a plurality of first receiving elements configured to receive the first ultrasonic wave;
a second receiver including a plurality of second receiving elements configured to receive the second ultrasonic wave;
a transporter configured to transport an inspection target along the second direction in a space between the first transmitter and the first receiver and between the second transmitter and the second receiver; and
a controller configured to cause the first transmitter to transmit the first ultrasonic wave and to cause the second transmitter to transmit the second ultrasonic wave, the controller being configured to supply a first signal to the one of the plurality of first transmitting elements and to supply a first neighboring signal to the other one of the plurality of first transmitting elements, the first neighboring signal being an inversion of the first signal.

2. The device according to claim 1, wherein
a distance between the second position and the first position is substantially the same as a distance between the second position and the first neighboring position.

3. The device according to claim 1, wherein
the plurality of first transmitting elements are arranged at a first pitch along the first direction,
the plurality of second transmitting elements are arranged at the first pitch along the first direction, and
positions of the plurality of second transmitting elements in the first direction are shifted by 1/2 of the first pitch with respect to the positions of the plurality of first transmitting elements in the first direction.

4. The device according to claim 1, wherein
the controller is configured to alternately supply the first signal and the first neighboring signal to the plurality of first transmitting elements.

5. The device according to claim 1, wherein
the controller includes a first circuit configured to generate the first signal and an inverting circuit configured to invert an output of the first circuit.

6. The device according to claim 1, wherein
the controller is configured to supply the first signal to one of the plurality of second transmitting elements, and to supply the first neighboring signal to another one of the plurality of second transmitting elements, and
the other one of the plurality of second transmitting elements is next to the one of the plurality of second transmitting elements.

7. The device according to claim 1, wherein
a phase of the first ultrasonic wave transmitted from the other one of the plurality of first transmitting elements is shifted by 180 degrees with respect to a phase of the first ultrasonic wave transmitted from the one of the plurality of first transmitting elements.

8. The device according to claim 1, wherein
the one of the plurality of first transmitting elements includes
a first transmitting transducer film configured to generate the first ultrasonic wave, and
a first transmitting waveguide configured to guide the first ultrasonic wave.

9. The device according to claim 8, wherein
one of the plurality of first receiving elements includes
a first receiving waveguide configured to guide the first ultrasonic wave, and
a first receiving transducer film deformable by the first ultrasonic wave,
the first transmitting waveguide is located between the first transmitting transducer film and the first receiving transducer film, and
the first receiving waveguide is located between the first transmitting waveguide and the first receiving transducer film.

10. An inspection device, comprising:
a first transmitter including a plurality of first transmitting elements, the plurality of first transmitting elements being arranged along a first direction and configured to transmit a first ultrasonic wave, one of the plurality of first transmitting elements including a first piezoelectric layer, another one of the plurality of first transmitting elements including a first neighboring piezoelectric layer, the other one of the plurality of first transmitting elements being next to the one of the plurality of first transmitting elements, a polarity of the first neighboring piezoelectric layer being inverted with respect to a polarity of the first piezoelectric layer;
a second transmitter including a plurality of second transmitting elements, the plurality of second transmitting elements being arranged along the first direction and configured to transmit a second ultrasonic wave, a second direction from the first transmitter to the second transmitter crossing the first direction, a second position of one of the plurality of second transmitting elements in the first direction being between a first position of the one of the plurality of first transmitting elements in the first direction and a first neighboring position of the other one of the plurality of first transmitting elements in the first direction;
a first receiver including a plurality of first receiving elements configured to receive the first ultrasonic wave;
a second receiver including a plurality of second receiving elements configured to receive the second ultrasonic wave;
a transporter configured to transport an inspection target along the second direction in a space between the first transmitter and the first receiver and between the second transmitter and the second receiver.

11. The device according to claim 10, further comprising:
a controller configured to cause the first transmitter to transmit the first ultrasonic wave and to cause the second transmitter to transmit the second ultrasonic wave, and
the controller is configured to supply a first signal to one of the plurality of first transmitting elements and to supply the first signal to the other one of the plurality of first transmitting elements.

12. The device according to claim 10, wherein
a distance between the second position and the first position is substantially the same as a distance between the second position and the first neighboring position.

13. The device according to claim 10, wherein
the plurality of first transmitting elements are arranged at a first pitch along the first direction,
the plurality of second transmitting elements are arranged at the first pitch along the first direction,
positions of the plurality of second transmitting elements in the first direction are shifted by 1/2 of the first pitch with respect to positions of the plurality of first transmitting elements in the first direction.

14. The device according to claim 1, wherein
a polarity of a piezoelectric layer included in each of the plurality of first transmitting elements is alternately inverted in the plurality of first transmitting elements, and
the controller is configured to supply the first signal to the plurality of first transmitting elements.

15. The device according to claim 14, wherein
a polarity of a piezoelectric layer included in each of the plurality of second transmitting elements is alternately inverted in the plurality of second transmitting elements, and
the controller is configured to supply the first signal to the plurality of second transmitting elements.

16. The device according to claim 10, wherein
a phase of the first ultrasonic wave transmitted from the other one of the plurality of first transmitting elements is shifted by 180 degrees with respect to a phase of the first ultrasonic wave transmitted from the one of the plurality of first transmitting elements.

17. The device according to claim 10, wherein
the one of the plurality of first transmitting elements includes
a first transmitting transducer film configured to generate the first ultrasonic wave, and
a first transmitting waveguide configured to guide the first ultrasonic wave.

18. The device according to claim 17, wherein
one of the plurality of first receiving elements includes
a first receiving waveguide configured to guide the first ultrasonic wave, and
a first receiving transducer film deformable by the first ultrasonic wave,
the first transmitting waveguide is located between the first transmitting transducer film and the first receiving transducer film, and
the first receiving waveguide is located between the first transmitting waveguide and the first receiving transducer film.

19. An inspection method, comprising:
causing a first transmitter to transmit a first ultrasonic wave and causing a second transmitter to transmit a second ultrasonic wave, an element section including
the first transmitter including a plurality of first transmitting elements, the plurality of first transmitting elements being arranged along a first direction and configured to transmit a first ultrasonic wave,
the second transmitter including a plurality of second transmitting elements, the plurality of second transmitting elements being arranged along the first direction and configured to transmit a second ultrasonic wave, a second direction from the first transmitter to the second transmitter crossing the first direction, a second position of one of the plurality of second transmitting elements in the first direction being between a first position of one of the plurality of first transmitting elements in the first direction and a first neighboring position of another one of the plurality of first transmitting elements in the first direction, the other one of the plurality of first transmitting elements being next to the one of the plurality of first transmitting elements,
a first receiver including a plurality of first receiving elements configured to receive the first ultrasonic wave, and
a second receiver including a plurality of second receiving elements configured to receive the second ultrasonic wave;
supplying a first signal to the one of the plurality of first transmitting elements;
supplying a first neighboring signal to the other one of the plurality of first transmitting elements, the first neighboring signal being an inversion of the first signal; and
inspecting an inspection target moving along the second direction in a space between the first transmitter and the first receiver and between the second transmitter and the second receiver.

20. An inspection method, comprising:
causing a first transmitter to transmit a first ultrasonic wave and causing a second transmitter to transmit a second ultrasonic wave to inspect an inspection target passing through a space between the first transmitter and the first receiver and between the second transmitter and the second receiver along a second direction, an element section including
the first transmitter including a plurality of first transmitting elements, the plurality of first transmitting elements being arranged along a first direction and configured to transmit the first ultrasonic wave, one of the plurality of first transmitting elements including a first piezoelectric layer, another one of the plurality of first transmitting elements including a first neighboring piezoelectric layer, the other one of the plurality of first transmitting elements being next to the one of the plurality of first transmitting elements, a polarity of the first neighboring piezoelectric layer being inverted with respect to a polarity of the first piezoelectric layer;
the second transmitter including a plurality of second transmitting elements, the plurality of second transmitting elements being arranged along the first direction and configured to transmit the second ultrasonic wave, the second direction from the first transmitter to the second transmitter crossing the first direction, a second position of one of the plurality of second transmitting elements in the first direction being between a first position of the one of the plurality of first transmitting elements in the first direction and a first neighboring position of the other one of the plurality of first transmitting elements in the first direction;
a first receiver including a plurality of first receiving elements configured to receive the first ultrasonic wave;
a second receiver including a plurality of second receiving elements configured to receive the second ultrasonic wave; and
a transporter configured to transport an inspection target along the second direction in a space between the first transmitter and the first receiver and between the second transmitter and the second receiver.
